# EUROPEAN PATENT APPLICATION

(11) **EP 4 480 632 A1**
(43) Date of publication of application: **25.12.2024**
(21) Application number: 24182792.2
(22) Date of filing: 18.06.2024
(51) Int. Cl.: B23Q 1/54, B23Q 7/14, B23Q 39/02

(54) **MACHINE FOR CUTTING AND PROCESSING SECTION BARS, IN PARTICULAR MADE OF ALUMINIUM, LIGHT ALLOYS, PVC OR THE LIKE**

(30) Priority: 23.06.2023 IT 202300013047
(71) Applicant: F.O.M. Industrie S.r.l., 47841 Cattolica (IT)
(72) Inventor: LATTANZI, Lorenzo, 47841 CATTOLICA (RN) (IT)
(74) Representative: Studio Torta S.p.A.

(57) **Abstract**

A machine for cutting and processing section bars (2) made of aluminium, light alloys, PVC or the like is provided with a cutting unit (24) to separate at least one component (25) from a section bar (2) and with an operating unit (26) to process the section bar (2) and/or the component (25); the operating unit (26) having at least one electric spindle (43) designed to receive and hold a tool (45) and movable around a vertical rotation axis (34) and a horizontal rotation axis (40), which are transverse to one another, in particular perpendicular to one another, between two symmetrical operating positions relative to a vertical symmetry plane (P) going through the two rotation axes (34, 40) .

## Description

### CROSS-REFERENCE TO RELATED APPLICATIONS

This patent application claims priority from Italian patent application no. 102023000013047 filed on June 23, 2023, the entire disclosure of which is incorporated herein by reference.

### TECHNICAL FIELD

The invention relates to a machine for cutting and processing section bars, in particular made of aluminium, light alloys, PVC or the like.

### BACKGROUND

In the field of cutting and processing section bars made of aluminium, light alloys, PVC or the like, a machine is known, which is of the type comprising an elongated base; at least one processing station mounted along the base; a feeding unit to hold at least one section bar at a rear end thereof and to feed the section bar along the base and through the processing station in a horizontal feeding direction; a cutting unit mounted in the processing station to separate at least one component from the section bar; and an operating unit mounted in the processing station to process the section bar and/or the component.

Generally speaking, the operating unit comprises an annular fifth wheel, which extends around a feeding path of the section bars through the processing station, is mounted so as to rotate around a rotation axis parallel to the feeding direction of the section bars and is provided with a plurality of electric spindles distributed along the annular fifth wheel itself.

Since the number of electric spindles is relatively high and the annular fifth wheel is relatively complex, known section bar cutting and processing machines of the type described above suffer from some drawbacks, which are mainly due to the fact that the operating unit is relatively complex and expensive and allows for a relatively small processing precision.

### SUMMARY

The object of the invention is to provide a machine for cutting and processing section bars, in particular made of aluminium, light alloys, PVC or the like, which is not affected by the aforementioned drawbacks and can be implemented in a simple and economic manner.

According to the invention, there is provided a machine for cutting and processing section bars, in particular made of aluminium, light alloys, PVC or the like, according to the appended claims.

### BRIEF DESCRIPTION OF THE DRAWINGS

The invention will now be described with reference to the accompanying drawings showing a non-limiting embodiment thereof, wherein:
figure 1 is a schematic perspective view, with parts removed for greater clarity, of a preferred embodiment of the section bar cutting and processing machine according to the invention;
figure 2 is a schematic perspective view, with parts removed for greater clarity, of a detail of the machine of figure 1;
figures 3, 4 and 5 are three schematic perspective views, with parts removed for greater clarity, of a detail of figure 2 shown in three different operating positions; and
figures 6 and 7 are two schematic side views, with parts removed for greater clarity, of a detail of figures 3, 4 and 5 shown in two different operating positions.

### DESCRIPTION OF EMBODIMENTS

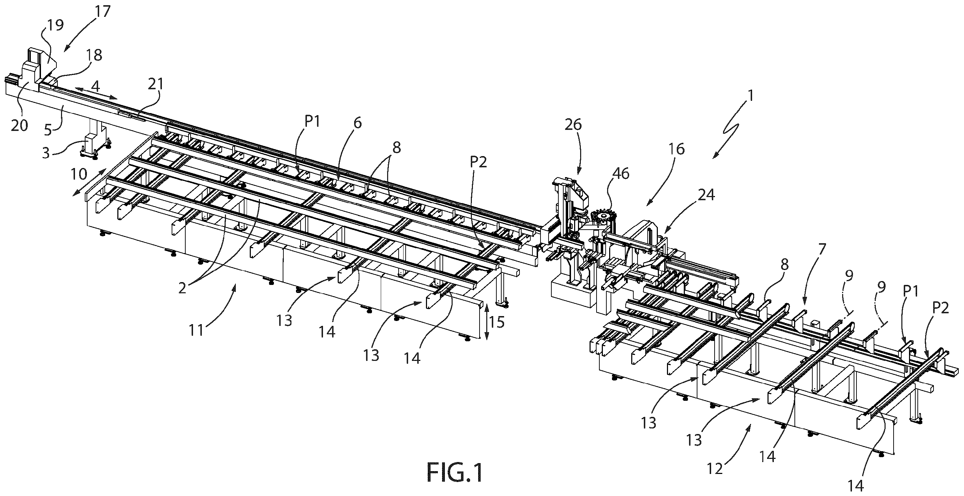

With reference to figure 1, number 1 indicates, as a whole, a machine for cutting and processing section bars 2 made of aluminium, light alloys, PVC or the like having an elongated shape.

The machine 1 comprises an elongated base 3, which extends in a horizontal direction 4 and is provided with a longitudinal guide member 5, which is parallel to the direction 4.

The machine 1 further comprises two roller support devices 6, 7 mounted in succession along the base 3. Each device 6, 7 has a plurality of lower rollers 8, which are mounted so as to rotate around respective rotation axes 9 substantially parallel to one another and to a horizontal direction 10 transverse to the direction 4 and define a lower support surface P1 for at least one section bar 2.

The machine 1 is further provided with a loading station 11 to load the section bars 2 to be processed onto the device 6 and an unloading station 12 to unload the section bars 2 that were just processed from the device 7.

Each station 11, 12 comprises a belt conveyor 13, which faces the relative device 6, 7 in the direction 10 and comprises, in turn, a plurality of conveyor belts 14, which are parallel to one another and to the direction 10 and define a lower support surface P2 for at least one section bar 2.

The rollers 8 are movable in a vertical direction 15, which is orthogonal to the directions 4 and 10, between a lifted operating position, in which the surface P1 extends above the surface P2, and a lowered rest position, in which the surface P1 extends under the surface P2.

The machine 1 further has a processing station 16, which is obtained along the base 3 between the stations 11, 12 and extends between the devices 6, 7.

The section bars 2 are moved along the surface P1 of the device 6 and through the station 16 in the direction 4 by a feeding device 17 comprising a first horizontal slide 18, which is coupled to the longitudinal member 5 in a sliding manner so as to make, relative to the base 3, straight movements along the longitudinal member 5 in the direction 4; a second horizontal slide 19, which is coupled to the horizontal slide 18 in a sliding manner so as to make, relative to the horizontal slide 18, straight movements in the direction 10; and a vertical slide 20, which is coupled to the horizontal slide 19 in a sliding manner so as to make, relative to the horizontal slide 19, straight movements in the direction 15.

The vertical slide 20 has an elongated shape, extends in the direction 4 and supports a gripping member 21, which is connected to a free end of the vertical slide 20.

The member 21 is coupled to the vertical slide 20 in a rotary manner so as to rotate, relative to the vertical slide 20, around a rotation axis (not shown) parallel to the direction 4 and comprises two jaws (not shown) movable between a clamping position and a release position to clamp and release the section bars 2.

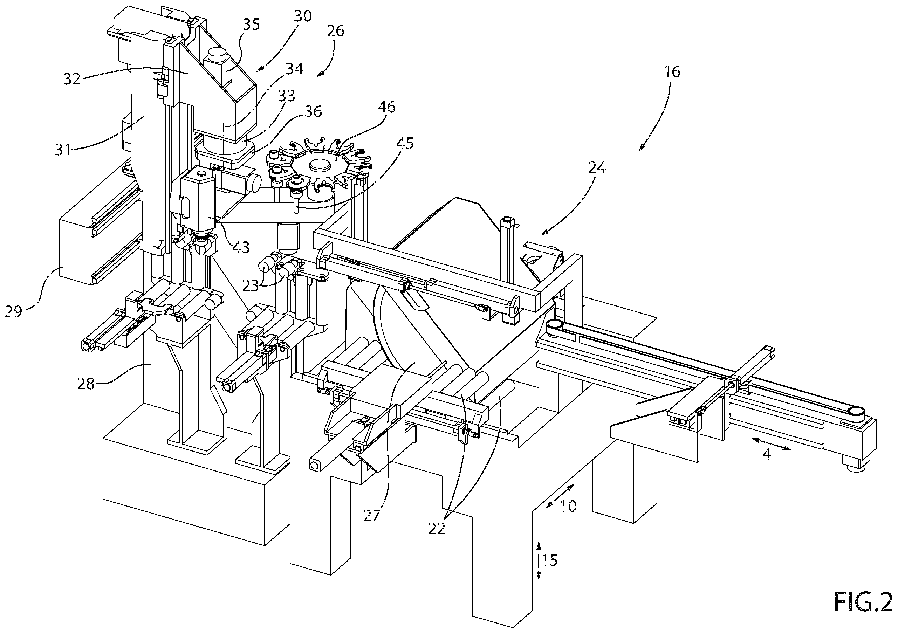

According to figure 2, the station 16 is provided with a plurality of lower rollers 22 and with a plurality of upper rollers 23, which are movable in the direction 15 between a clamping position and a release position to clamp and release the section bars 2.

The station 16 is further provided with a cutting unit 24 to separate at least one component 25 from each section bar 2, and with an operating unit 26 arranged between the support device 6 and the unit 24 to process the section bars 2 and/or the components 25.

The unit 24 comprises a cutting blade 27, which can be oriented around a rotation axis parallel to the direction 10 and is movable in the direction 10 so as to separate the components 25 from the section bars 2.

The unit 26 comprises a vertical upright 28, which extends in the direction 15 and carries, connected at a free end of its, a horizontal cross member 29 parallel to the direction 10.

The cross member 29 supports an operating head 30 comprising a horizontal slide 31 movable along the cross member 29 in the direction 10 and a vertical slide 32 coupled to the slide 31 so as to make straight movements in the direction 15.

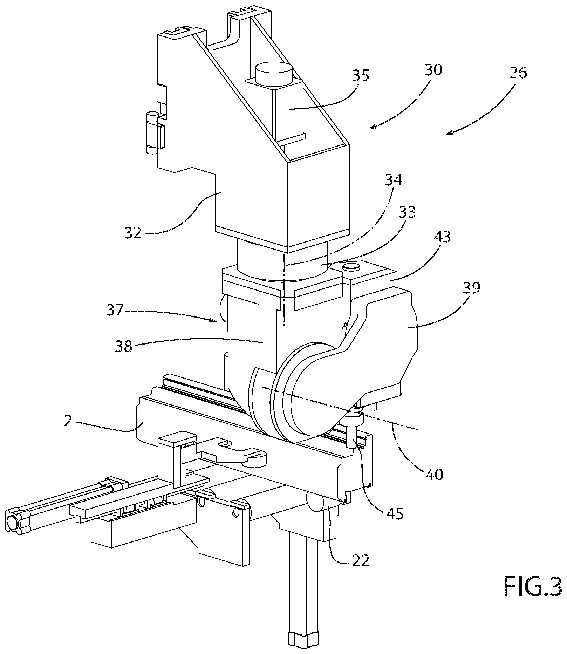

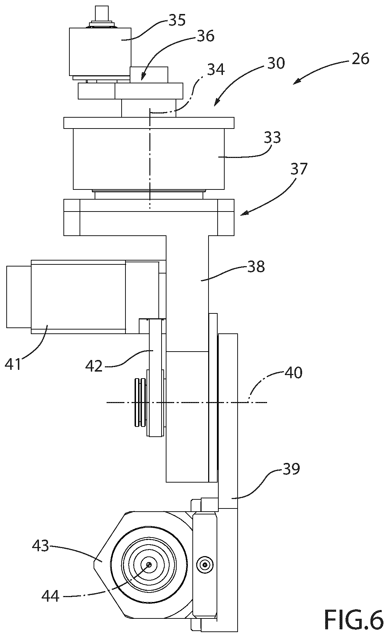

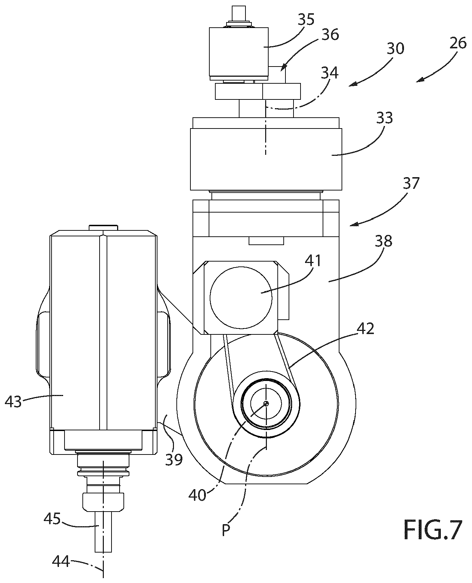

With reference to figures 3 to 7, the head 30 further comprises a rotary sleeve 33, which protrudes downwards from the slide 32 and is mounted so as to rotate around a vertical rotation axis 34 due to the thrust of an electric motor 35, whose output shaft (not shown) is connected to the sleeve 33 through the interposition of a gear reduction unit 36.

The sleeve 33 is connected to a support 37, which is L-shaped, extends downwards from the sleeve 33 and comprises a coupling bracket 38 with a flat shape, which is parallel to the direction 15.

The head 30 is further provided with a flat crank 39, which extends in a containing plane parallel to a containing plane of the bracket 38 and is coupled in a rotary manner to the bracket 38 so as to rotate, relative to the bracket 38, around a horizontal rotation axis 40 perpendicular to the axis 34 and, hence, intersecting the axis 34.

The crank 39 is moved around the axis 40 by an electric motor 41, which is fixed to the bracket 38 and is coupled to the crank 39 through the interposition of a belt transmission 42.

With regard to what discussed above, it should be pointed out that the crank 39 and the motor 41 are mounted on opposite side faces of the bracket 38.

The head 30 finally comprises an electric spindle 43, which is fixed to a free end of the crank 39, has a longitudinal axis 44 transverse to the axis 40 and is configured to receive and hold a tool 45.

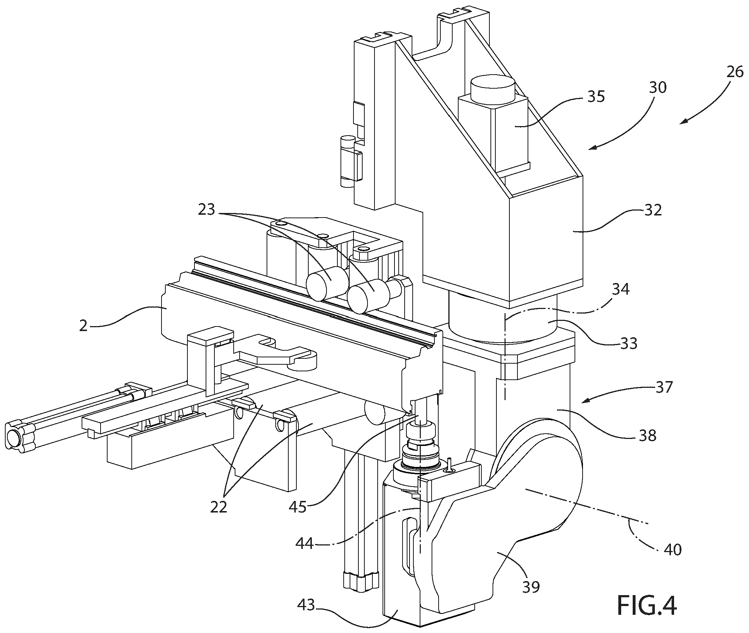

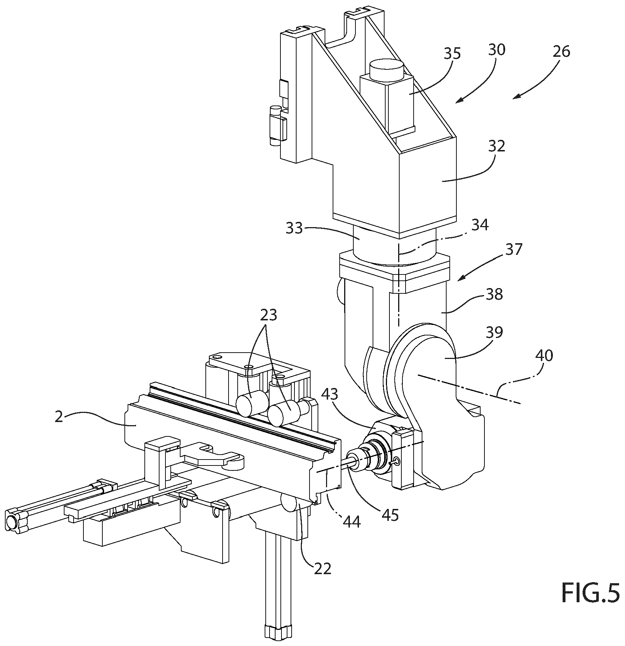

The electric spindle 43 is moved around the axis 40, according to an angle preferably but not necessarily measuring 180°, between a first operating position (figure 3), in which the tool 45 faces downwards with the axis 44 parallel to the direction 15 and is oriented so as to process an upper face of the section bar 2, a second operating position (figure 4), in which the tool 45 faces upwards with the axis 44 parallel to the direction 15 and is oriented so as to process a lower face of the section bar 2, and a third operating position (figure 5), in which the tool 45 is arranged with the axis 44 parallel to the direction 4 or 10 and is oriented so as to process a side face of the section bar 2.

With regard to what described above, it should be pointed out that, when the electric spindle 43 is in the aforementioned first and second operating positions, the axis 44 is in two symmetrical positions relative to a vertical symmetry plane P going through the axes 34 and 40.

The unit 26 finally comprises a tool-holder store 46 for a plurality of tools 45 arranged so as to allow the electric spindle 43 to replace the tools 45 in an automated manner.

The machine 1 has some advantages, which are mainly due to the fact that the operating unit 26 has relatively small dimensions, is configured to process all the faces of the section bars 2, uses one single electric spindle 43 and, therefore, is relatively simple and economic.

According to a variant which is not shown herein, the axes 34 and 40 are transverse to one another and, therefore, do not intersect one another and the vertical symmetry plane P goes through the axis 40.

## Claims

1. A machine for cutting and processing section bars (2), in particular made of aluminium, light alloys, PVC or the like, the machine comprising an elongated base (3) extending in a first horizontal direction (4); at least one processing station (16) obtained along the base (3); a feeding device (17) to feed at least one section bar (2) along the base (3) and through the processing station (16) in the first direction (4); a cutting unit (24) mounted in the processing station (16) to separate at least one component (25) from the section bar (2); and an operating unit (26) mounted in the processing station (16) to process the section bar (2) and/or the component (25); the operating unit (26) comprising, in turn, at least one electric spindle (43), which is designed to receive and hold a tool (45) mounted so as to rotate around a longitudinal axis (44) of its, and a moving assembly (30), which is configured to move the electric spindle (43) in a second horizontal direction (10) transverse to the first direction (4), in a third vertical direction (15) orthogonal to said first and second direction (4, 10) and around a first vertical rotation axis (34), and is configured to further move the electric spindle (43) around a second horizontal rotation axis (40), which is transverse, in particular perpendicular, to the first rotation axis (34), between two operating positions, in which the longitudinal axis (44) of the tool (45) places itself in symmetrical positions relative to a vertical symmetry plane (P) going through at least the second rotation axis (40); and being **characterized in that**, when the electric spindle (43) is in a first operating position, the tool (45) is parallel to the first rotation axis (34) and is oriented upwards, and **in that**, when the electric spindle (43) is in a second operating position, the tool (45) is parallel to the first rotation axis (34) and is oriented downwards.

2. The machine according to claim 1, wherein the moving assembly (30) comprises a horizontal slide (31) movable in the second direction (10), a vertical slide (32) movable in the third direction (15) and a support element (33, 37) mounted so as to rotate around the first rotation axis (34).

3. The machine according to claim 2, wherein the moving assembly (30) further comprises a crank (39) mounted so as to rotate around the second rotation axis (40); the electric spindle (43) being fixed to the crank (39).

4. The machine according to claim 3, wherein the moving assembly (30) further comprises an actuation device (41) to move the crank (39) according to a 180° angle around the second rotation axis (40).

5. The machine according to claim 4, wherein the support element (33, 37) comprises a coupling bracket (38), which has a flat shape and carries, connected thereto, the crank (39) and the actuation device (41).

6. The machine according to claim 5, wherein the crank (39) and the actuation device (41) are mounted on opposite side faces of the coupling bracket (38).

7. The machine according to claim 5 or 6, wherein the crank (39) has a flat shape, is coupled to the coupling bracket (38) in a rotary manner and projects from the coupling bracket (38).

8. The machine according to any one of the preceding claims, wherein the processing station (16) further comprises a tool-holding store (46) for a plurality of tools (45), which is arranged so as to transfer, in an automated manner, the tools (45) between the tool-holding store (46) and the electric spindle (43).

9. The machine according to any one of the preceding claims, wherein, when said first and second rotation axis (34, 40) are perpendicular to one another, the symmetry plane (P) goes through said first and second rotation axis (34, 40) .
